# FASCICULE DE BREVET EUROPEEN

(11) **EP 3 914 447 B1**
(45) Date de publication et mention de la délivrance du brevet: **24.04.2024**
(21) Numéro de dépôt: 20706573.1
(22) Date de dépôt: 21.01.2020
(51) Int. Cl.: B32B 17/06, B32B 17/10

(54) **VITRAGE ISOLANT A RÉSISTANCE AUX IMPACTS AMÉLIORÉE**
ISOLIERGLASSCHEIBE MIT VERBESSERTER SCHLAGZÄHIGKEIT
INSULATING GLAZING WITH IMPROVED IMPACT RESISTANCE

(30) Priorité: 23.01.2019 FR 1900586
(43) Date de publication de la demande: 01.12.2021
(73) Titulaire: Saint-Gobain Glass France, 92400 Courbevoie (FR)
(72) Inventeur: VILLEY, Richard, 60880 JAUX (FR); TACCOEN, Nicolas, 75019 PARIS (FR)
(74) Mandataire: Saint-Gobain Recherche
(86) Numéro de dépôt international: PCT/FR2020/050076
(87) Numéro de publication internationale: WO 2020/152416

(56) Documents cités:
- EP-A1- 0 816 064
- EP-A1- 0 842 767
- WO-A1-2010/010156
- WO-A1-2017/151346

## Description

La présente invention concerne le domaine du vitrage, et porte plus particulièrement sur un vitrage isolant présentant une résistance aux impacts améliorée, c'est-à-dire possédant une capacité accrue à absorber totalement l'énergie cinétique d'un objet impactant le vitrage, c'est-à-dire aussi à arrêter cet objet sans qu'il ne perfore le vitrage.

Un vitrage isolant se compose classiquement d'un assemblage de plusieurs vitrages parallèles, séparés par une cavité renfermant une lame de gaz, souvent du gaz isolant.

Dans le domaine du bâtiment notamment, dans lequel ces vitrages isolants sont très utilisés pour des raisons d'isolation phonique et d'isolation thermique, on cherche de plus en plus à augmenter leur résistance aux impacts et à la perforation, dans le but de leur conférer un caractère anti-effraction/anti-vandalisme, de protéger les personnes des bris de verre et des risques consécutifs à une chute contre le vitrage, ou encore dans le but de garantir une résistance à des intempéries violentes (grêle), notamment pour les vitrages isolants de fenêtres de toit.

Si la résistance aux impacts/à la perforation est meilleure pour un vitrage isolant que pour un vitrage simple monolithique, il apparaît cependant qu'un vitrage isolant composé uniquement de vitrages monolithiques ne présente pas une résistance suffisante aux impacts/à la perforation pour conférer un caractère anti-effraction/anti-vandalisme ou pour protéger les personnes des bris de verre et des risques consécutifs à une chute contre le vitrage, ou encore pour garantir une résistance à des intempéries violentes.

Les vitrages feuilletés, constitués de deux feuilles de verre entre lesquelles est laminée une couche adhésive intercalaire, présentent pour certains d'entre eux une bonne résistance aux impacts et à la perforation.

La norme EN 356 définit par exemple huit classes de performances à partir de tests représentant l'aptitude des vitrages à résister aux jets d'objets (niveaux 1 à 5 ou P1A à P5A de la norme EN 356) ou aux tentatives d'effraction à l'aide d'une masse ou d'une hache (niveaux 6 à 8 ou P6B à P8B de la norme EN 356).

Pour des raisons historiques dans le domaine des vitrages feuilletés, la couche adhésive intercalaire a une masse surfacique multiple de 411 g/m².

La masse surfacique de la couche adhésive intercalaire est déterminée par pesée d'une certaine surface de couche après conditionnement d'au moins 48 heures à une humidité relative de 25%.

Les vitrages feuilletés doivent avoir une masse surfacique de couche adhésive intercalaire d'au moins deux fois 411 g/m² pour passer le niveau de performances minimal de la norme EN 356.

Plus les feuilles de verre du vitrage feuilleté sont épaisses, meilleure est la classe de performances EN 356. De même, plus la masse surfacique de la couche adhésive intercalaire est importante, meilleure est la classe de performances EN 356.

Pour augmenter la résistance d'un vitrage isolant, il peut donc être intéressant que l'un des vitrages de l'assemblage soit un vitrage feuilleté ayant des performances EN 356 de niveau P2A. Comme indiqué précédemment, ceci suppose une masse surfacique assez importante du vitrage feuilleté et par conséquent du vitrage isolant, qui s'insère alors plus difficilement dans les supports de vitrage existants dans le domaine du bâtiment.

Les vitrages feuilletés les plus fins répondant au niveau P2A de la norme EN 356 sont des vitrages du type 33-2, à savoir des feuilles de verre d'épaisseur de 3 mm encadrant une couche adhésive intercalaire de masse surfacique 2*411 g/m².

Cette conformité au niveau P2A de la norme EN 356 est actuellement mesurée par une méthode dite du test de la chute de bille (en anglais ball drop testing ou hard body drop test), qui consiste à lâcher successivement trois billes d'acier de 10 cm de diamètre et d'une masse de 4,1 kg d'une certaine hauteur sur le verre. Pour atteindre le niveau P2A, il faut que trois échantillons d'un verre résistent chacun à trois chutes de bille successives d'une hauteur de 3 m.

D'un point de vue statistique, il est très difficile de tirer des conclusions claires sur une performance d'un verre en raison du nombre limité d'échantillons (détermination d'une probabilité d'échec à 3 m avec seulement trois échantillons).

Une méthode plus robuste pour évaluer les performances de verres feuilletés selon la norme EN 356 a été développée par la Société Déposante et est la hauteur de perforation moyenne avec trois billes (en anglais mean break height with three balls). Cette méthode consiste à lâcher trois billes successivement depuis une certaine hauteur sur un échantillon de verre feuilleté. Si l'échantillon passe le test sans être perforé par les trois billes, alors un autre verre feuilleté du même type est testé, en lâchant les trois billes depuis une hauteur plus importante correspondant à la hauteur du test précédent plus une valeur d'incrément fixe. Si l'échantillon ne passe pas le test, alors un autre verre feuilleté du même type est testé, en lâchant les trois billes depuis une hauteur moins importante correspondant à la hauteur du test précédent moins une valeur d'incrément fixe. En répétant ce test, on convergera puis oscillera naturellement autour de la hauteur de perforation moyenne du vitrage par trois billes, autrement dit la hauteur à laquelle la moitié des échantillons sont perforés et l'autre moitié ne le sont pas, ce qui permet de quantifier précisément la résistance du verre feuilleté aux impacts, c'est-à-dire sa capacité à arrêter un impacteur sans qu'il ne perfore le vitrage. On choisira de préférence la hauteur de départ proche de la hauteur de perforation moyenne attendue pour les vitrages testés, la valeur d'incrément fixe (en plus ou en moins) étant quant à elle de préférence proche de l'écart type de la distribution de probabilité examinée par le test (probabilité d'échec au test à trois billes en fonction de la hauteur de chute des billes) . Pour un test de performances P2A avec un vitrage feuilleté, on choisira ainsi une hauteur de départ de 3,6 m et une valeur d'incrément de 0,3 m. Un traitement statistique de cette méthode montre que la hauteur de perforation moyenne ainsi que l'écart-type associé et l'intervalle de confiance à 95% sur la valeur de la hauteur moyenne de perforation peuvent être définis et calculés (voir Dixon W. J. Mood A., « A method for obtaining and analyzing sensitivity data » (Méthode pour obtenir et analyser des données de sensibilité), Journal of the American Statistical Association, 43, 1948). Une fois la hauteur moyenne de perforation et l'écart-type associé obtenus, on peut alors estimer si la différence entre la hauteur moyenne de perforation et la hauteur cible (par exemple 3 m pour le P2A) est suffisamment grande devant l'écart-type de la distribution pour s'assurer que la probabilité d'échec à la hauteur cible est suffisamment faible. Par exemple, si la hauteur cible est de 3 m, la hauteur moyenne de perforation est de 3,6 m et l'écart-type est de 0,3 m, cela signifie que la différence de 0,6 m vaut deux fois l'écart-type, et la probabilité d'échec à 3 m vaut alors 2,3% pour une distribution normale (gaussienne).

L'utilisation de cette méthode sur beaucoup de vitrages 33-2, déclarés par certains fabricants au niveau P2A de la norme EN 356 par le test de la chute de bille, montre que ces vitrages ont une hauteur moyenne de perforation proche de 3,2 m (différence entre la hauteur moyenne de perforation et la hauteur cible égale à une fois l'écart-type voire moins), et donc ne sont pas vraiment de niveau de performances P2A puisqu'ils présentent une probabilité d'échec à 3 m non négligeable (en moyenne 20%). Quant aux vitrages 22-2 (à savoir des feuilles de verre d'épaisseur de 2 mm encadrant une couche adhésive intercalaire de masse surfacique 2*411 g/m²), leur hauteur moyenne de perforation se révèle proche de 2,9 m, ce qui signifie que plus de 50% de ces vitrages échoueront au test EN 356 niveau P2A, et que les vitrages de type 22-2 dans leur ensemble ne pourront pas être certifiés EN 356 niveau P2A.

La demande internationale PCT WO2010/010156A1 décrit un vitrage isolant selon le préambule de la revendication 1.

La demande de brevet européen EP0816064A1 décrit un vitrage feuilleté ayant des propriétés de résistance à la flexion.

Pour résoudre le problème de trouver un vitrage isolant suffisamment fin pour s'adapter aux supports et normes existant dans le bâtiment, tout en présentant un niveau de performances EN 356 satisfaisant, la Société Déposante a développé un vitrage isolant comportant au moins un vitrage feuilleté au moins de niveau P2A de la norme EN 356 selon la méthode de hauteur moyenne de perforation, suffisamment fin pour s'intégrer sans modification dans des assemblages de vitrage isolant existants adaptés aux normes courantes du bâtiment.

La présente invention a donc pour objet un vitrage isolant comprenant un assemblage de vitrages parallèles, deux vitrages consécutifs dans l'assemblage étant séparés par une cavité renfermant une lame de gaz, ledit vitrage isolant comprenant au moins un vitrage feuilleté, l'au moins un vitrage feuilleté comprenant deux feuilles de verre entre lesquelles est laminée une couche adhésive intercalaire, caractérisé par le fait que la couche adhésive intercalaire a une masse surfacique comprise entre 843 g/m² et 1211 g/m², la valeur de l'adhésion verre-couche adhésive intercalaire mesurée par la méthode TCT à 33 mm.s-1 et 20°C étant inférieure strictement à 20 kJ/m2. Une adhésion verre-intercalaire trop forte empêche en cas de choc la dissipation d'énergie par délamination et étirement de l'intercalaire (voir Elzière P. et. al., « Large strain viscoelastic dissipation during interfacial rupture in laminated glass » (Dissipation viscoélastique en grandes déformations lors de la rupture interfaciale dans les verres feuilletés), Soft Matter, 13.10.1039, 2017).

La méthode TCT (acronyme de l'anglais Through-Cracked-Tensile (TCT) test, ou test de tension à travers une fissure) est une méthode de mesure de l'énergie absorbée par unité de surface de vitrage feuilleté pendant la déformation de ce dernier après la rupture du verre. Cette méthode est notamment décrite dans le document « Mechanical behaviour in tension of cracked glass bridged by an elastomeric ligament » (Comportement mécanique en tension de verre brisé ponté par un ligament élastomère), S. Muralidhar, A. Jagota, S.J. Bennison, S. Saigal, Acta Materialia, Volume 48, numéros 18-19, 1er décembre 2000, pages 4577-4588. Cette valeur d'adhésion verre-couche adhésive intercalaire de 20 kJ/m² correspond sensiblement à une valeur inférieure à 7 sur l'échelle Pummel.

Le vitrage feuilleté peut se trouver à toute position dans l'assemblage du vitrage isolant, à savoir côté extérieur du vitrage isolant, côté intérieur du vitrage isolant, ou dans le cas de vitrages isolants ayant plus de deux vitrages dans l'assemblage, entre le vitrage côté intérieur et le vitrage côté extérieur, les côtés intérieur et extérieur s'entendant respectivement des faces du vitrage isolant destinées à l'intérieur et à l'extérieur du bâtiment d'installation.

La présente invention va donc à l'encontre des pratiques profondément ancrées dans le domaine du verre, à savoir une couche adhésive intercalaire dans l'au moins un vitrage feuilleté qui n'est pas un multiple de 411 g/m², pour obtenir un compromis faible épaisseur du vitrage (et par conséquent du vitrage isolant) et résistance aux impacts/à la perforation selon la norme EN 356 au moins au niveau de performances P2A grâce à la surépaisseur d'intercalaire.

Selon un mode de réalisation, chaque feuille de verre du vitrage feuilleté a une épaisseur comprise entre 1,6 mm et 2,4 mm, de préférence comprise entre 1,8 mm et 2,2 mm.

Selon un mode de réalisation, la couche adhésive intercalaire a une masse surfacique comprise entre 865 g/m² et 973 g/m².

On obtient ainsi un vitrage isolant comprenant un vitrage feuilleté de type 22-2 passant le niveau P2A de la norme EN 356 de manière assurée, du fait de la surépaisseur de l'intercalaire, conférant ainsi une plus grande résistance aux impacts/à la perforation au vitrage isolant, tout en restant très mince et léger : il mesurera 25 mm d'épaisseur et pèsera environ 21 kg/m², soit une surépaisseur de 4% et un surpoids de 5% par rapport à un vitrage isolant double contenant deux verres monolithiques de 4 mm d'épaisseur séparés par une lame de gaz de 16 mm d'épaisseur. L'épaisseur et la masse du vitrage isolant sont donc rendues minimales pour des performances de résistance requise, ce qui permet des économies de matière et donc des réductions de coûts du vitrage isolant et un moindre impact environnemental, ainsi qu'une meilleure transparence.

Selon un autre mode de réalisation, chaque feuille de verre du vitrage feuilleté a une épaisseur comprise entre 2,6 mm et 3,4 mm, de préférence comprise entre 2,8 mm et 3,2 mm.

Selon un mode de réalisation, la couche adhésive intercalaire a une masse surfacique comprise entre 854 g/m² et 952 g/m².

On obtient ainsi un vitrage isolant comprenant un vitrage feuilleté de type 33-2 passant le niveau P2A de la norme EN 356 de manière assurée, du fait de la surépaisseur de l'intercalaire, conférant ainsi une plus grande résistance au vitrage isolant, tout en restant relativement mince et léger : +12% d'épaisseur et +29% de masse par rapport à un vitrage isolant double contenant deux verres monolithiques de 4 mm d'épaisseur séparés par une lame de gaz de 16 mm d'épaisseur. L'épaisseur et la masse du vitrage isolant sont donc rendues minimales pour des performances de résistance aux impacts/à la perforation requise, ce qui permet des économies de matière et donc des réductions de coûts du vitrage isolant et un moindre impact environnemental.

Selon un mode de réalisation, la couche adhésive intercalaire est monocouche.

Selon un mode de réalisation, la couche adhésive intercalaire est multicouche.

La couche adhésive intercalaire peut notamment être constituée par le poly(butyral vinylique) (PVB).

Selon un mode de réalisation, les vitrages de l'assemblage qui ne sont pas l'au moins un vitrage feuilleté sont constitués par des verres monolithiques.

Les verres monolithiques peuvent notamment être constitués par un matériau choisi dans le groupe comprenant les polymères structuraux, de préférence le poly(méthacrylate de méthyle), le polycarbonate, le polyuréthane structural, les verres sodocalciques, les verres d'aluminosilicate, les verres de borosilicate, facultativement trempés thermiquement ou trempés chimiquement.

Selon un mode de réalisation, un ou plusieurs vitrages de l'assemblage sont recouverts d'au moins un revêtement mince inorganique assurant au moins une fonction parmi une faible émissivité et une diminution de l'apport calorifique par le soleil.

Selon un mode de réalisation, les verres monolithiques de l'assemblage ont une épaisseur comprise entre 1 mm et 25 mm.

Selon un mode de réalisation, chaque lame de gaz a une épaisseur comprise entre 4 mm et 30 mm.

Selon un mode de réalisation, le gaz est un gaz isolant choisi dans le groupe constitué par l'air, l'argon, le krypton, le xénon et leurs mélanges.

Afin de mieux illustrer l'objet de la présente invention, on va en décrire ci-après un mode de réalisation particulier, en référence au dessin annexé.

Sur ce dessin :

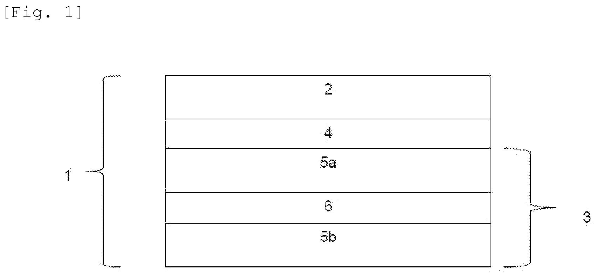

[Fig. 1] représente une vue en coupe d'un vitrage isolant selon la présente invention.

Si l'on se réfère à la Figure 1, on peut voir que l'on y a représenté un vitrage isolant 1 selon un mode de réalisation de l'invention.

Le vitrage isolant 1 est constitué d'un assemblage d'un vitrage monolithique 2 et d'un vitrage feuilleté 3 séparés par une cavité 4 renfermant un gaz isolant.

Le vitrage feuilleté 3 est constitué de deux feuilles de verre monolithiques 5a, 5b séparées par une couche adhésive intercalaire 6.

Bien que la Figure 1 représente un vitrage isolant constitué d'un unique vitrage monolithique et d'un unique vitrage feuilleté, l'invention n'est pas limitée à cet égard, et le vitrage isolant pourrait contenir plus d'un vitrage feuilleté, plus de deux vitrages, qu'ils soient feuilletés ou monolithiques, le ou les vitrages feuilletés ayant n'importe quelle place dans l'assemblage constituant le vitrage isolant.

A titre d'exemple non limitatif, le vitrage feuilleté 3 peut être un vitrage feuilleté pour lequel chaque feuille de verre 5a, 5b a une épaisseur comprise entre 1,6 mm et 2,4 mm, de préférence comprise entre 1,8 mm et 2,2 mm, et la couche adhésive intercalaire 6 a une masse surfacique comprise entre 843 g/m²et 1211 g/m², de préférence comprise entre 865 g/m²et 973 g/m².

Un tel vitrage feuilleté 22-2 a une performance P2A selon la norme EN 356, vérifiée par la méthode du mean break height (MBH - hauteur de perforation moyenne avec trois billes), conférant donc une résistance aux impacts/à la perforation importante au vitrage isolant, avec une épaisseur et une masse réduites.

A titre de comparaison, un vitrage isolant double sans feuilleté utilisera typiquement deux verres monolithiques de 4 mm d'épaisseur séparés par une lame de gaz de 16 mm d'épaisseur. Un tel vitrage fera 24 mm d'épaisseur et pèsera environ 20 kg/m², mais n'aura aucune performance à la norme EN 356. Le même vitrage où l'un des verres monolithiques est remplacé par un vitrage feuilleté de type 22-2 passant le niveau P2A de la norme EN 356 de manière assurée mesurera 25 mm d'épaisseur et pèsera environ 21 kg/m², soit une surépaisseur de 4% et un surpoids de 5%. Si l'on utilise à l'inverse un vitrage feuilleté conventionnel passant le niveau P2A de la norme EN 356 de manière assurée, soit un 44-2 (deux verres de 4 mm d'épaisseur séparés par un intercalaire d'une masse surfacique de 822 g/m²), pour remplacer l'un des verres monolithiques du vitrage isolant sans feuilleté précité, on obtiendra un vitrage 55% plus lourd (31 kg/m²) et 20% plus épais (28,8 mm).

A titre d'exemple non limitatif, le vitrage feuilleté 3 peut être un vitrage feuilleté pour lequel chaque feuille de verre du vitrage feuilleté a une épaisseur comprise entre 2,6 mm et 3,4 mm, de préférence comprise entre 2,8 mm et 3,2 mm, la couche adhésive intercalaire ayant une masse surfacique comprise entre 843 g/m²et 1211 g/m², de préférence comprise entre 854 g/m² et 952 g/m².

Un tel vitrage feuilleté 33-2 a une performance P2A selon la norme EN 356, vérifiée par la méthode du mean break height (hauteur de perforation moyenne avec trois billes), conférant donc une résistance aux impacts/à la perforation importante au vitrage isolant, avec une épaisseur et une masse réduites : +12% d'épaisseur et +29% de masse par rapport à un vitrage isolant double contenant deux verres monolithiques de 4 mm d'épaisseur séparés par une lame de gaz de 16 mm d'épaisseur.

Le tableau 1 ci-dessous illustre les valeurs de hauteur de perforation moyenne avec trois billes pour trois familles de verres feuilletés à intégrer dans un vitrage isolant : 44-2, 33-2 et 22-2, avec la probabilité de perforation à 3 m et la probabilité d'échec à la norme EN 356, les performances de succès de passage de la norme EN 356 d'un vitrage isolant incorporant un tel verre feuilleté étant logiquement toujours supérieures à celles du verre feuilleté seul, et également supérieures à celles d'un vitrage isolant dont le verre feuilleté seul ne passe pas la norme EN 356. MBH3 dans le Tableau 1 représente la hauteur de perforation moyenne avec trois billes.

**[Table 1]**

| **Verre 1 [mm]** | **Masse surfacique de PVB [g/m²]** | **Verre 2 [mm]** | **MBH3 [m]** | **écart-type [m]** | **Probabilité de perforation à 3m [%]** | **Probabilité d'échec au test EN 356 (3 vitrages) [%]** |
|---|---|---|---|---|---|---|
| 4 | 822 | 4 | 3,53 | 0,38 | 8 | 23 |
| 3 | 822 | 3 | 3,31 | 0,32 | 17 | 42 |
| 3 | 854 | 3 | 3,8 | 0,6 | 9 | 25 |
| 3 | 897 | 3 | 4,18 | 0,5 | 1 | 3 |
| 2 | 822 | 2 | 2,95 | 0,48 | 54 | 90 |
| 2 | 897 | 2 | 3,88 | 0,68 | 10 | 27 |

## Revendications

1. - Vitrage isolant (1) comprenant un assemblage de vitrages parallèles, deux vitrages consécutifs dans l'assemblage étant séparés par une cavité (4) renfermant une lame de gaz, ledit vitrage isolant (1) comprenant au moins un vitrage feuilleté (3), l'au moins un vitrage feuilleté (3) comprenant deux feuilles de verre (5a, 5b) entre lesquelles est laminée une couche adhésive intercalaire (6), **caractérisé par le fait que** la couche adhésive intercalaire (6) a une masse surfacique comprise entre 843 g/m² et 1211 g/m², la valeur de l'adhésion verre-couche adhésive intercalaire mesurée par la méthode TCT à 33 mm.s⁻¹ et 20°C telle que définie dans la description étant inférieure strictement à 20 kJ/m².

2. - Vitrage isolant (1) selon la revendication 1, **caractérisé par le fait que** chaque feuille de verre (5a, 5b) du vitrage feuilleté (3) a une épaisseur comprise entre 1,6 mm et 2,4 mm, de préférence comprise entre 1,8 mm et 2,2 mm.

3. - Vitrage isolant (1) selon la revendication 2, **caractérisé par le fait que** la couche adhésive intercalaire (6) a une masse surfacique comprise entre 865 g/m² et 973 g/m2.

4. - Vitrage isolant (1) selon la revendication 1, **caractérisé par le fait que** chaque feuille de verre (5a, 5b) du vitrage feuilleté (3) a une épaisseur comprise entre 2,6 mm et 3,4 mm, de préférence comprise entre 2,8 mm et 3,2 mm.

5. - Vitrage isolant (1) selon la revendication 4, **caractérisé par le fait que** la couche adhésive intercalaire (6) a une masse surfacique comprise entre 854 g/m² et 952 g/m2.

6. - Vitrage isolant (1) selon l'une des revendications 1 à 5, **caractérisé par le fait que** la couche adhésive intercalaire (6) est monocouche.

7. - Vitrage isolant (1) selon l'une des revendications 1 à 5, **caractérisé par le fait que** la couche adhésive intercalaire (6) est multicouche.

8. - Vitrage isolant (1) selon l'une des revendications 1 à 7, **caractérisé par le fait que** la couche adhésive intercalaire (6) est constituée par le poly(butyral vinylique) (PVB).

9. - Vitrage isolant (1) selon l'une des revendications 1 à 8, **caractérisé par le fait que** les vitrages (2) de l'assemblage qui ne sont pas l'au moins un vitrage feuilleté sont constitués par des verres monolithiques.

10. - Vitrage isolant (1) selon la revendication 9, **caractérisé par le fait que** les verres monolithiques sont constitués par un matériau choisi dans le groupe comprenant les polymères structuraux, de préférence le poly(méthacrylate de méthyle), le polycarbonate, le polyuréthane structural, les verres sodocalciques, les verres d'aluminosilicate, les verres de borosilicate, facultativement trempés thermiquement ou trempés chimiquement.

11. - Vitrage isolant (1) selon la revendication 10, **caractérisé par le fait qu'**un ou plusieurs vitrages de l'assemblage sont recouverts d'au moins un revêtement mince inorganique assurant au moins une fonction parmi une faible émissivité et une diminution de l'apport calorifique par le soleil.

12. - Vitrage isolant (1) selon la revendication 9 ou la revendication 10 ou la revendication 10, **caractérisé par le fait que** les verres monolithiques de l'assemblage ont une épaisseur comprise entre 1 mm et 25 mm.

13. - Vitrage isolant (1) selon l'une des revendications 1 à 12, **caractérisé par le fait que** chaque lame de gaz (4) a une épaisseur comprise entre 4 mm et 30 mm.

14. - Vitrage isolant (1) selon l'une des revendications 1 à 13, **caractérisé par le fait que** le gaz est un gaz isolant choisi dans le groupe constitué par l'air, l'argon, le krypton, le xénon et leurs mélanges.

## Patentansprüche

1. Isolierverglasung (1), umfassend eine Anordnung von parallelen Verglasungen, wobei zwei aufeinanderfolgende Glasscheiben in der Anordnung durch einen Hohlraum (4) getrennt sind, der einen Gasspalt beinhaltet, die Isolierverglasung (1) umfassend mindestens eine Verbundverglasung (3), die mindestens eine Verbundverglasung (3) umfassend zwei Glasscheiben (5a, 5b), zwischen denen eine Haftzwischenlagenschicht (6) laminiert ist,
**dadurch gekennzeichnet, dass** die Haftzwischenlagenschicht (6) eine flächenbezogene Masse zwischen 843 g/m² und 1211 g/m² aufweist, wobei der Haftwert Glas-Haftzwischenlagenschicht, gemessen nach der TCT-Methode bei 33 mm.s⁻¹ und 20 °C, wie in der Beschreibung definiert, strikt kleiner als 20 kJ/m² ist.

2. Isolierverglasung (1) nach Anspruch 1, **dadurch gekennzeichnet, dass** jede Glasscheibe (5a, 5b) der Verbundverglasung (3) eine Dicke zwischen 1,6 mm und 2,4 mm, vorzugsweise zwischen 1,8 mm und 2,2 mm, aufweist.

3. Isolierverglasung (1) nach Anspruch 2, **dadurch gekennzeichnet, dass** die Haftzwischenlagenschicht (6) eine flächenbezogene Masse zwischen 865 g/m² und 973 g/m² aufweist.

4. Isolierverglasung (1) nach Anspruch 1, **dadurch gekennzeichnet, dass** jede Glasscheibe (5a, 5b) der Verbundverglasung (3) eine Dicke zwischen 2,6 mm und 3,4 mm, vorzugsweise zwischen 2,8 mm und 3,2 mm, aufweist.

5. Isolierverglasung (1) nach Anspruch 4, **dadurch gekennzeichnet, dass** die Haftzwischenlagenschicht (6) eine flächenbezogene Masse zwischen 854 g/m² und 952 g/m² aufweist.

6. Isolierverglasung (1) nach einem der Ansprüche 1 bis 5,
**dadurch gekennzeichnet, dass** die Haftzwischenlagenschicht (6) einschichtig ist.

7. Isolierverglasung (1) nach einem der Ansprüche 1 bis 5,
**dadurch gekennzeichnet, dass** die Haftzwischenlagenschicht (6) mehrschichtig ist.

8. Isolierverglasung (1) nach einem der Ansprüche 1 bis 7,
**dadurch gekennzeichnet, dass** die Haftzwischenlagenschicht (6) aus Poly(vinylbutyral) (PVB) besteht.

9. Isolierverglasung (1) nach einem der Ansprüche 1 bis 8,
**dadurch gekennzeichnet, dass** die Verglasungen (2) der Anordnung, die nicht die mindestens eine Verbundverglasung sind, aus monolithischen Gläsern bestehen.

10. Isolierverglasung (1) nach Anspruch 9, **dadurch gekennzeichnet, dass** die monolithischen Gläser aus einem Material bestehen, das aus der Gruppe ausgewählt ist, umfassend strukturelle Polymere, vorzugsweise Poly(methylmethacrylat), Polycarbonat, strukturelles Polyurethan, Natronkalkgläser, Aluminosilikatgläser, Borsilikatgläser, wahlweise thermisch gehärtet oder chemisch gehärtet.

11. Isolierverglasung (1) nach Anspruch 10, **dadurch gekennzeichnet, dass** eine oder mehrere Verglasungen der Anordnung mit mindestens einer dünnen anorganischen Beschichtung versehen sind, die mindestens eine Funktion aus einem niedrigen Emissionsvermögen und einer Verringerung des Wärmeangebots durch die Sonne gewährleistet.

12. Isolierverglasung (1) nach Anspruch 9 oder 10 oder 10,
**dadurch gekennzeichnet, dass** die monolithischen Gläser der Anordnung eine Dicke zwischen 1 mm und 25 mm aufweisen.

13. Isolierverglasung (1) nach einem der Ansprüche 1 bis 12,
**dadurch gekennzeichnet, dass** jeder Gasspalt (4) eine Dicke zwischen 4 mm und 30 mm aufweist.

14. Isolierverglasung (1) nach einem der Ansprüche 1 bis 13,
**dadurch gekennzeichnet, dass** das Gas ein Isoliergas ist, das aus der Gruppe ausgewählt ist, bestehend aus Luft, Argon, Krypton, Xenon und deren Mischungen.

## Claims

1. - An insulating glazing pane (1) comprising an assembly of parallel glazing panes, with two consecutive glazing panes in the assembly being separated by a cavity (4) containing a gas cushion, said insulating glazing pane (1) comprising at least one laminated glazing pane (3), the at least one laminated glazing pane (3) comprising two glass sheets (5a, 5b), between which an adhesive interlayer (6) is laminated, **characterized in that** the mass per unit area of the adhesive interlayer (6) is between 843 g/m² and 1211 g/m², with the value of the glass-adhesive interlayer adhesion measured using the TCT method at 33 mm.s⁻¹ and 20°C as defined in the description being strictly less than 20 kJ/m².

2. - The insulating glazing pane (1) as claimed in claim 1, **characterized in that** each glass sheet (5a, 5b) of the laminated glazing pane (3) is between 1.6 mm and 2.4 mm thick, preferably between 1.8 mm and 2.2 mm thick.

3. - The insulating glazing pane (1) as claimed in claim 2, **characterized in that** the mass per unit area of the adhesive interlayer (6) is between 865 g/m² and 973 g/m².

4. - The insulating glazing pane (1) as claimed in claim 1, **characterized in that** each glass sheet (5a, 5b) of the laminated glazing pane (3) is between 2.6 mm and 3.4 mm thick, preferably between 2.8 mm and 3.2 mm thick.

5. - The insulating glazing pane (1) as claimed in claim 4, **characterized in that** the mass per unit area of the adhesive interlayer (6) is between 854 g/m² and 952 g/m².

6. - The insulating glazing pane (1) as claimed in one of claims 1 to 5, **characterized in that** the adhesive interlayer (6) is single-layered.

7. - The insulating glazing pane (1) as claimed in one of claims 1 to 5, **characterized in that** the adhesive interlayer (6) is multi-layered.

8. - The insulating glazing pane (1) as claimed in one of claims 1 to 7, **characterized in that** the adhesive interlayer (6) is formed by polyvinyl butyral (PVB).

9. - The insulating glazing pane (1) as claimed in one of claims 1 to 8, **characterized in that** the glazing panes (2) of the assembly that are not the at least one laminated glazing pane are formed by monolithic glass sheets.

10. - The insulating glazing pane (1) as claimed in claim 9, **characterized in that** the monolithic glass sheets are formed by a material selected from the group comprising structural polymers, preferably poly(methyl methacrylate), polycarbonate, structural polyurethane, sodo-calcic glass sheets, aluminosilicate glass sheets, borosilicate glass sheets, optionally thermally tempered or chemically tempered.

11. - The insulating glazing pane (1) as claimed in claim 10, **characterized in that** one or more glazing panes of the assembly are covered with at least one thin inorganic coating providing at least one function from among low emissivity and a reduction in the heat input from the sun.

12. - The insulating glazing pane (1) as claimed in claim 10 or claim 10, **characterized in that** the monolithic glass sheets of the assembly are between 1 mm and 25 mm thick.

13. - The insulating glazing pane (1) as claimed in one of claims 1 to 12, **characterized in that** each gas cushion (4) is between 4 mm and 30 mm thick.

14. - The insulating glazing pane (1) as claimed in one of claims 1 to 13, **characterized in that** the gas is an insulating gas selected from the group made up of air, argon, krypton, xenon and the mixtures thereof.
